# EUROPÄISCHE PATENTANMELDUNG

(11) **EP 1 980 380 A1**
(43) Veröffentlichungstag der Anmeldung: **15.10.2008**
(21) Anmeldenummer: 08006717.6
(22) Anmeldetag: 02.04.2008
(51) Int. Cl.: B29C 33/04, B29C 45/37, B29C 45/73, B22C 9/06, B22F 3/105, F28F 3/12, F28F 7/02

(54) **Vorrichtung zum Erwärmen oder Kühlen, insbesondere als Teil einer Werkzeugform zur Verarbeitung plastischer Massen, wie Kunststoffspritzgießform**

(30) Priorität: 13.04.2007 DE 102007017914
(71) Anmelder: LBC Laser Bearbeitungs Center GmbH, 70806 Kornwestheim (DE)
(72) Erfinder: Dimter, Mark Frank, 70806 Kornwestheim (DE); Mayer, Ralph, 70806 Kornwestheim (DE)
(74) Vertreter: Ostriga, Sonnet, Wirths & Roche

(57) **Zusammenfassung**

Die Erfindung betrifft u.a. eine Vorrichtung zum Erwärmen oder Kühlen, insbesondere als Teil einer Werkzeugform zur Verarbeitung plastischer Massen, wie Kunststoffspritzgießform, mit wenigstens einem Temperierkanal (13), zur Leitung eines dem Kühlen oder dem Erwärmen der Vorrichtung (10) dienenden Temperiermediums (T).

Die Besonderheit besteht u.a. darin, dass der Temperierkanal (13) zumindest mit einem Teilumfang von der Innenfläche (37) eines schichtweise aus Pulverwerkstoff auf einer Fläche (31) eines Tragteils (11) der Vorrichtung (10) aufgetragenen und schichtweise verschweißten etwa rohrartigen Gebildes (14, 15) begrenzt ist.

## Beschreibung

Die Erfindung betrifft zunächst eine Vorrichtung zum Erwärmen oder Kühlen, gemäß dem Oberbegriff des Anspruchs 1.

Aus der US 2005 / 0038551 A1 ist Verfahren zur Herstellung eines Werkzeugs bekannt, bei welchem auf der Oberfläche schichtweise eine Legierung aufgetragen und mittels eines fokussierten Hitzestrahls verschweißt wird. Weiterhin weist die Vorrichtung Mittel auf, mittels welcher der Prozess geregelt werden kann. In der so aufgetragenen Oberfläche können Kühlkanäle ausgespart sein, mit denen eine Temperaturregelung möglich ist.

Aus der US 2002 / 0165634 A1 ist ein Verfahren bekannt, bei welchem auf einem laminierten Grundsubstrat eine Pulverschicht aufgetragen und verschweißt wird. Die Schicht kann so gewählt sein, dass sie eine gewünschte Oberflächencharakteristik aufweist. Beim Herstellen der Schicht kommt das DMD-Verfahren zum Einsatz. In die aufgetragene Schicht können Kühlkanäle integriert sein.

Nachteilig an dem beschriebenen Stand der Technik ist jedoch, dass die mit dem Pulverauftragsschweißen erzeugte Schicht relativ langwierig in der Herstellung ist.

Zunächst ist es, ausgehend von dem erstgenannten Stand der Technik, Aufgabe der Erfindung, eine Vorrichtung zum Kühlen und Erwärmen zu schaffen, deren Herstellung vereinfacht ist und die schneller und somit wirtschaftlicher herstellbar ist.

Die Aufgabe wird gemäß einem ersten Aspekt der Erfindung mit den Merkmalen des Anspruchs 1 gelöst, insbesondere mit den kennzeichnenden Merkmalen.

Das Prinzip der Erfindung besteht darin, dass der Temperierkanal in etwa rohrartig durch schichtweisen Auftrag eines Metallpulvers auf einem Tragteil und wenigstens bereichsweises Verschweißen der Schicht erzeugt ist. Die Innenfläche des auf diese Weise erzeugten Gebildes begrenzt zumindest teilweise den Temperierkanal. Die Wandstärke und die Form des rohrartigen Gebildes können über die Länge des Temperierkanals unterschiedlich sein. Das Tragteil kann z.B. eben oder als Freiformelement ausgebildet sein. Das Tragteil kann demnach eine ebene oder eine frei geformte Oberfläche aufweisen, auf welcher das Gebilde aufgebaut ist.

Das Tragteil kann auf herkömmliche Weise hergestellt sein, es ist also nicht erforderlich, dass es aus einem Pulverwerkstoff gebildet ist. Der auf diese Weise erzeugte Temperierkanal kann z.B. in einer Ausnehmung eines Aufnahmeteils der Vorrichtung aufgenommen sein. Die Ausnehmung kann z.B. durch Fräsen hergestellt sein. Andere Herstellungsmethoden sind aber ebenfalls denkbar. Das Aufnahmeteil kann mehrere Ausnehmungen aufweisen. Darüber hinaus kann das Aufnahmeteil zusätzlich auch wenigstens einen Temperierkanal aufweisen.

Tragteil im Sinne der Erfindung kann jeder Bestandteil der Vorrichtung z.B. ein Werkzeugteil, wie eine Werkzeugplatte oder ein Werkzeugeinsatz sein. Die Oberfläche des Tragteils kann eben oder frei geformt sein. Der von Pulverwerkstoff gebildete Teil des Temperierkanals ist also mittels einer Schweißverbindung an dem Tragteil befestigt.

Vorrichtung im Sinne der Erfindung kann z.B. ein Bestandteil eines Werkzeugs, z.B. eines Formwerkzeugs, sein.

Rohrartig bedeutet im Sinne der Erfindung, dass der wenigstens eine Temperierkanal allseitig von einer Wand begrenzt ist. Der von verschweißtem Pulverwerkstoff gebildete Teil des Temperierkanals weist im Gegensatz zu einer großflächigen Schicht eine begrenzte Wandstärke auf. Zwei Temperierkanäle bzw. Vor- und Rücklauf eines Temperierkanals können z.B. eine gemeinsame Wand aufweisen und untereinander mittels einer Trennwand separiert sein. Eine Wandseite des Temperierkanals kann z.B. von dem Tragteil gebildet sein.

Pulverwerkstoff im Sinne der Erfindung kann jeder verschweißbare metallische Werkstoff sein. Zum Verschweißen des Pulverwerkstoffs kann z.B. eine Laserschweiß-Vorrichtung oder z.B. eine Elektronenstrahl-Schweißvorrichtung verwendet werden. Alternativ können aber auch andere Schweißvorrichtungen eingesetzt werden.

Der Vorteil der Erfindung besteht darin, dass die Vorrichtung zum Erwärmen oder Kühlen mit einem sehr viel geringeren Herstellungsaufwand, insbesondere einer geringeren Bearbeitungszeit, herstellbar ist. Die Form, das Material und die Gestaltung des Temperierkanals sind über seine Länge hinweg frei wählbar. Sie können daher an die Gegebenheiten der Vorrichtung angepasst sein.

Gemäß einer ersten Ausführungsform ist der Temperierkanal von der Fläche des Tragteils und von der Innenfläche des nur einen Teilumfang aufweisenden etwa rohrartigen Gebildes begrenzt. Diese Ausführungsform ist z.B. dann vorteilhaft, wenn das Temperiermedium nicht mit dem Werkstoff des Tragteils reagiert.

Einer weiteren Ausführungsform gemäß ist der Temperierkanal insgesamt von der Innenfläche des etwa rohrartigen Gebildes begrenzt. Das rohrartige Gebilde kann beispielsweise von einem auf dem Tragteil aufgebrachten schichtweise verschweißten Pulverwerkstoff gebildet sein. Bei dem Pulverwerkstoff kann es sich z.B. um Edelstahl handeln. Diese Ausführungsform kann z.B. verwendet werden, um zu verhindern, dass das Temperiermedium mit dem Werkstoff des Tragteils reagiert. Durch eine tragteilseitige Beschichtung, die nicht mit dem Temperiermedium wechselwirkt, kann eine Korrosion des Tragteils sowie eine Verschmutzung des Temperiermediums verhindert werden.

Gemäß einer weiteren Ausführungsform sind das Tragteil und das Aufnahmeteil form- und / oder kraftschlüssig miteinander verbunden. Beispielsweise können das Tragteil und das Aufnahmeteil durch Schrauben miteinander verspannt sein. Zwischen dem Tragteil und dem Aufnahmeteil kann ein Dichtmittel angeordnet sein. Hierdurch kann verhindert werden, dass Temperierflüssigkeit aus der Werkzeugform austritt, welches z.B. aufgrund einer Leckage aus dem Temperierkanal entweichen kann. Zwar ist der aus Pulver hergestellte Temperierkanal in der Regel gasdicht, sollte aber dennoch eine Leckage auftreten, so kann das zwischen Tragteil und Aufnahmeteil vorgesehene Dichtmittel ein Austreten des Temperiermediums verhindern.

Einer weiteren Ausführungsform gemäß sind das Tragteil und das Aufnahmeteil von einem Werkzeugstahl gebildet. Ein handelsüblicher Werkzeugstahl hat den Vorteil, dass er handelsüblich ist und zu geringen Kosten und in unterschiedlichen Größen, beispielsweise als Normalie, erhältlich ist. Der auf dem Tragteil befestigte Temperierkanal kann von einem Edelstahl gebildet sein, wodurch eine Korrosion des Temperierkanals durch das Temperiermedium verhindert wird.

Um zu verhindern, dass die Wand des Temperierkanals von dem Temperiermedium korrodiert wird, kann sie allseitig aus einem Edelstahl ausgebildet sein. Zu diesem Zweck kann auf dem Tragteil eine Pulverschicht aus Edelstahl aufgetragen und verschweißt sein, welche eine tragteilseitige Wand oder einen Boden des rohrartigen Temperierkanals bildet. Alternativ kann die Wand des Temperierkanals einseitig vom Tragteil selbst gebildet sein, z.B. wenn der Werkstoff des Tragteils nicht durch das Temperiermedium korrodiert wird.

Einer weiteren Ausgestaltung der Erfindung gemäß weist der Temperierkanal eine im Wesentlichen elliptische Form auf. Diese Form ist leicht herstellbar und gestattet eine durch die große Oberfläche hervorgerufene gute Wärmeübertragung. Alternativ sind für den Querschnitt des Temperierkanals aber auch andere Formen wählbar.

Einer weiteren Ausführungsform gemäß ist zwischen einer Außenfläche des Temperierkanals und einer Innenfläche der Ausnehmung in dem Aufnahmeteil ein wärmeleitendes Material angeordnet. Das kann z. B. eine Wärmeleitpaste sein. Unter Verwendung des wärmeleitenden Materials ist eine bessere Wärmeübertragung zwischen Temperiermedium und dem Aufnahmeteil möglich.

Ein Luftspalt zwischen dem Temperierkanal und Aufnahmeteil hätte isolierende Eigenschaften. Zwischen Aufnahmeteil und Temperierkanal würde ein geringer Wärmeübergang stattfinden. Um einen Spalt zu verhindern, müsste die Ausnehmung des Aufnahmeteils exakt an den Temperierkanal angepasst sein. Bei Verwendung eines Wärmeleitmittels in dem Zwischenraum zwischen Temperierkanal und Innenwand der Ausnehmung, wird eine wärmeleitende Brücke geschaffen. Aus diesem Grunde kann sich bei dieser Ausführungsform die Form des Temperierkanals von der Form der Ausnehmung unterscheiden. Beispielsweise kann die Form des Temperierkanals elliptisch und die Form der Ausnehmung halbkreisförmig sein.

Einer weiteren Ausführungsform gemäß ist der Temperierkanal mit einer Anschlussvorrichtung versehen, mittels welcher der Anschluss an eine Temperiermittelzu- bzw. -abführung ermöglicht ist. Derartige Anschlüsse können beispielsweise ein Gewinde oder einen Schnellverschluss aufweisen. Die Anschlussvorrichtung kann so ausgebildet sein, dass ein Anschluss der Temperiermittelzuführung bzw. Temperiermittelabführung von einer Außenseite der Vorrichtung möglich ist. Dafür kann die Anschlussvorrichtung z.B. eine Verbindung zu einem Kanal in einem benachbarten Teil der Vorrichtung aufweisen.

Einer weiteren Ausgestaltung der Erfindung gemäß ist zwischen Aufnahmeteil und Tragteil ein Zwischenteil angeordnet, welches mit wenigstens einem Temperierkanal und / oder wenigstens einer Ausnehmung versehen ist. Das Teil der Vorrichtung kann wenigstens einen Temperierkanal und wenigstens eine Ausnehmung zur Aufnahme eines Temperierkanals aufweisen. Das Teil der Vorrichtung kann z.B. von einer Platte einer Werkzeugform gebildet sein und wenigstens eine Ausnehmung auf der einen Plattenseite sowie wenigstens einen Temperierkanal auf der anderen Plattenseite aufweisen, wobei Letzterer in einer Ausnehmung eines weiteren Teils der Werkzeugform aufgenommen sein kann. Ausnehmungen und Temperierkanäle können auch auf der gleichen Plattenseite angeordnet sein und mit entsprechend ausgebildeten Ausnehmungen und Temperierkanälen einer anderen Werkzeugplatte korrespondieren. Die Vorrichtung kann z.B. mehrere Teile, z.B. mehrere Werkzeugplatten, jeweils mit einem oder mehreren Temperierkanälen bzw. Ausnehmungen für Temperierkanäle, aufweisen.

Des Weiteren betrifft die Erfindung ein Verfahren zum Erzeugen einer Vorrichtung zum Erwärmen oder Kühlen gemäß dem Oberbegriff des Anspruchs 16.

Ausgehend von dem vorgenannten Stand der Technik ist es des Weiteren Aufgabe der Erfindung, ein Verfahren zu schaffen, mittels welchem eine temperierte Vorrichtung auf einfachere Weise herstellbar ist.

Die Aufgabe wird gemäß einem zweiten Aspekt der Erfindung mit den Merkmalen des Anspruchs 16 gelöst, insbesondere mit den kennzeichnenden Merkmalen.

Bezüglich der Vorteile der Erfindung wird auf die Ausführungen zu Patentanspruch 1 verwiesen.

Weitere Vorteile der Erfindung ergeben sich aus den Unteransprüchen sowie anhand von in den Figuren dargestellten Ausführungsbeispielen. Es zeigen:
Fig. 1 eine schematische Schnittdarstellung eines Teils einer Werkzeugform mit integriertem Temperierkanal,
Fig. 2 in Anlehnung an Fig. 1 eine schematische Schnittdarstellung einer den Temperierkanal aufweisenden Platte der Werkzeugform,
Fig.3 in Anlehnung an Fig. 2 eine schematische Schnittdarstellung eines Temperierkanals ohne separaten Boden,
Fig.4 eine perspektivische schematische Darstellung einer Platte mit zwei Temperierkanälen und Anschlussvorrichtungen zur Temperiermittelzu- und -ableitung,
Fig.5 in Anlehnung an Fig. 1 eine schematische Schnittdarstellung einer Aufbauplatte der Werkzeugform,
Fig. 6 eine schematische Schnittdarstellung einer Werkzeugform mit Temperierkanälen in unterschiedlichen Ebenen der Werkzeugform,
Fig.7 eine schematische Draufsicht auf eine Platte einer Werkzeugsform mit zwei Temperierkanälen,
Fig.8 eine schematische Schnittdarstellung gemäß Schnittlinie VIII-VIII in Fig. 7,
Fig.9 eine schematische Schnittdarstellung gemäß Schnittlinie IX-IX in Fig. 8,
Fig. 10 eine schematische Schnittdarstellung gemäß Schnittlinie X-X in Fig. 7,
Fig. 11 eine schematische Schnittdarstellung gemäß Schnittlinie XI-XI in Fig. 10,
Fig. 12 eine schematische Draufsicht auf eine Platte einer Werkzeugform mit zwei Temperierkanälen, und
Fig. 13 eine schematische Schnittdarstellung gemäß Schnittlinie XIII-XIII in Fig. 12.

Eine Werkzeugform insgesamt wird mit der Bezugsziffer 10 bezeichnet. Soweit im Folgenden voneinander abweichende Ausführungsformen gezeigt sind, sind einander analoge Merkmale trotz körperlicher Abweichungen stets mit derselben Bezugsziffer versehen.

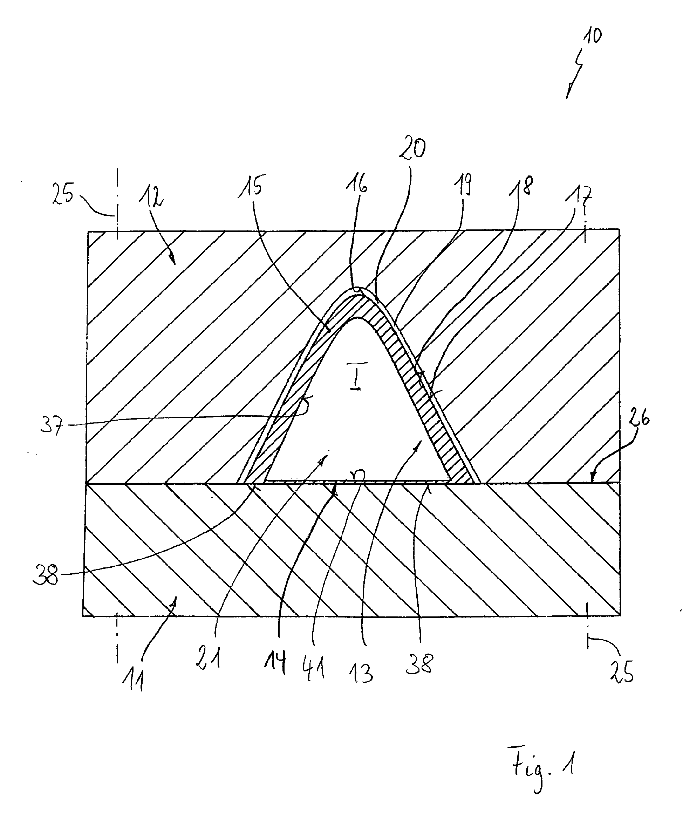

Die Werkzeugform 10 umfasst gemäß Fig. 1 eine Grundplatte 11 sowie eine Aufbauplatte 12. An der Grundplatte 11 ist ein Temperierkanal 13 angeordnet, welcher einen Boden 14 sowie eine Wand 15 aufweist. Der Boden 14 sowie die Wand 15 des Temperierkanals 13 sind z.B. aus Edelstahl ausgebildet, während die Grundplatte 11 von einem Werkzeugstahl gebildet ist.

Der Temperierkanal 13 ist in einer Ausnehmung 16 der Aufbauplatte 12 aufgenommen. Zwischen einer Außenfläche 17 der Wand 15 des Temperierkanals 13 sowie einer Innenfläche 18 der Ausnehmung 16 ist ein Zwischenraum 20 ausgebildet. In dem Zwischenraum 20 ist ein Wärmeleitmittel 19 aufgenommen, weiches den Zwischenraum 20 z.B. im Wesentlichen vollständig ausfüllt. Das Wärmeleitmittel 19 hat den Zweck, in dem Zwischenraum 20 eine Wärmebrücke zu schaffen, um auf diese Weise einen besseren Wärmeübergang zwischen der Aufbauplatte 12 und der Wand 15 zu schaffen und einen Wärmeaustausch mit einem in einem Innenraum 21 des Temperierkanals 13 fließenden Temperiermedium T zu erhalten. Ist z.B. in bestimmten Bereichen kein Wärmeleitmittel 19 im Zwischenraum 20 angeordnet, wirkt die im Zwischenraum 20 befindliche Luft isolierend, so dass eine schlechte Wärmeübertragung die Folge ist. Das kann z.B. in bestimmten Bereichen der Werkzeugform 10 gewünscht sein, um an diesen Stellen einen geringeren Wärmeaustausch zwischen Temperiermedium und Werkzeugform 10 zu erhalten.

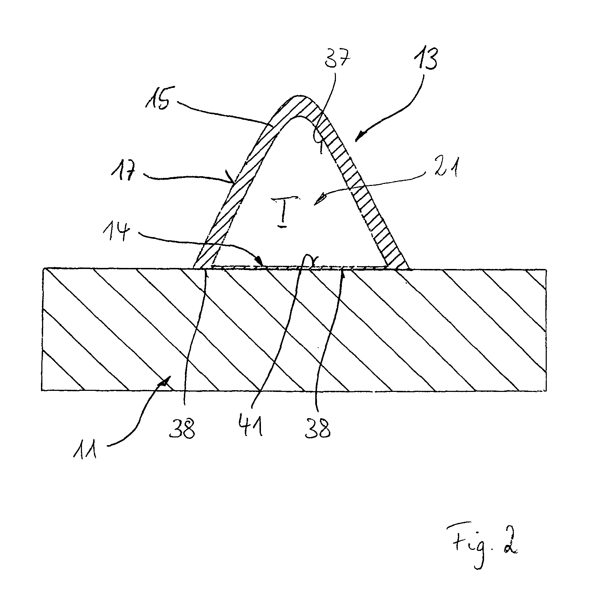

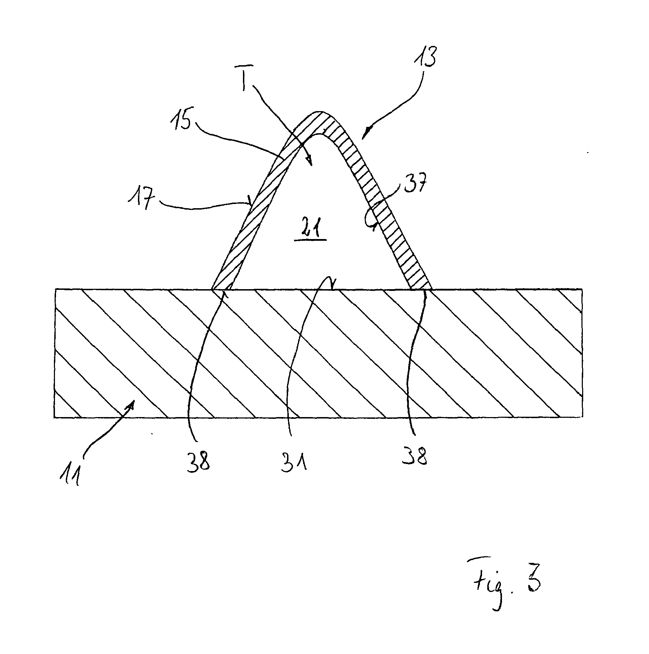

Die Grundplatte 11 ist in Fig. 2 als Einzelteil dargestellt. Während die Grundplatte 11 aus einem Werkzeugstahl hergestellt ist, sind der Boden 14 sowie die Wand 15 des Temperierkanals 13 aus einem korrosionsfesten Edelstahl gebildet. Der Temperierkanal 13 ist somit von einer Innenfläche 37 der Wand 15 sowie von einer Außenfläche 41 des Bodens 14 begrenzt. Mit dieser Ausführungsform wird verhindert, dass der Temperierkanal 13 von dem Temperiermedium T korrodiert wird und auf diese Weise das Temperiermedium T verschmutzt und die Funktionsfähigkeit des Temperierkanals 13, beispielsweise durch Leckagen, vermindert wird. Da der Boden 14 ebenfalls aus Edelstahl hergestellt ist, kann eine Wechselwirkung zwischen Temperiermedium T und der Grundplatte 11 nicht stattfinden. In dem Fall, dass z.B. das Temperiermedium T nicht chemisch mit dem Material der Grundplatte 11 reagiert, kann der Boden 14 des Temperierkanals 13 fehlen (siehe Fig. 3). Der Temperierkanal 13 ist somit bei dieser Ausführungsform von der Innenfläche 37 der Wand 15 sowie der Außenseite 31 der Grundplatte 11 begrenzt.

Der Boden 14 sowie die Wand 15 des Temperierkanals 13 sind durch Pulverauftragsschweißen hergestellt. Dabei wird zunächst eine Pulverschicht auf die Grundplatte 11 aufgetragen, deren Dicke je nach Werkstoff unterschiedlich ist. Im vorliegenden Fall beträgt die Schichtdicke ca. 2/100 Millimeter. Die Pulverschicht wird entsprechend der Form, die der Temperierkanal in der betreffenden Schichtebene aufweisen soll, von einem Laserstrahl verschweißt. Alternativ könnte die Pulverschicht auch mittels anderer Schweißvorrichtungen, z.B. mittels einer Elektronenstrahl-Schweißvorrichtung, verschweißt werden.

Der Laserstrahl kann z.B. bei der Bestrahlung der Bereiche jeder einzelnen Pulverschicht stark fokussiert sein, die bei dem fertig ausgebildeten Temperierkanal 13 nahe einer Grenzfläche 38 zur Grundplatte 11 bzw. zu der Außenfläche 16 oder der Innenfläche 37 der Wand 15 angeordnet sind. Bereiche jeder Schicht, die von den Außenflächen weiter entfernt sind, und die z.B. Kernbereiche der Wand 15 des Temperierkanals 13 bilden, können mit einem weniger stark fokussierten Laserstrahl bestrahlt werden. Das hat zur Folge, dass im Kern das Metallpulver weniger stark verschmolzen ist. Relativbewegungen im Gefüge des Temperierkanals 13, z.B. durch partielle Erwärmung, sind somit möglich und Spannungen können daher besser abgebaut und auf diese Weise Risse vermieden werden.

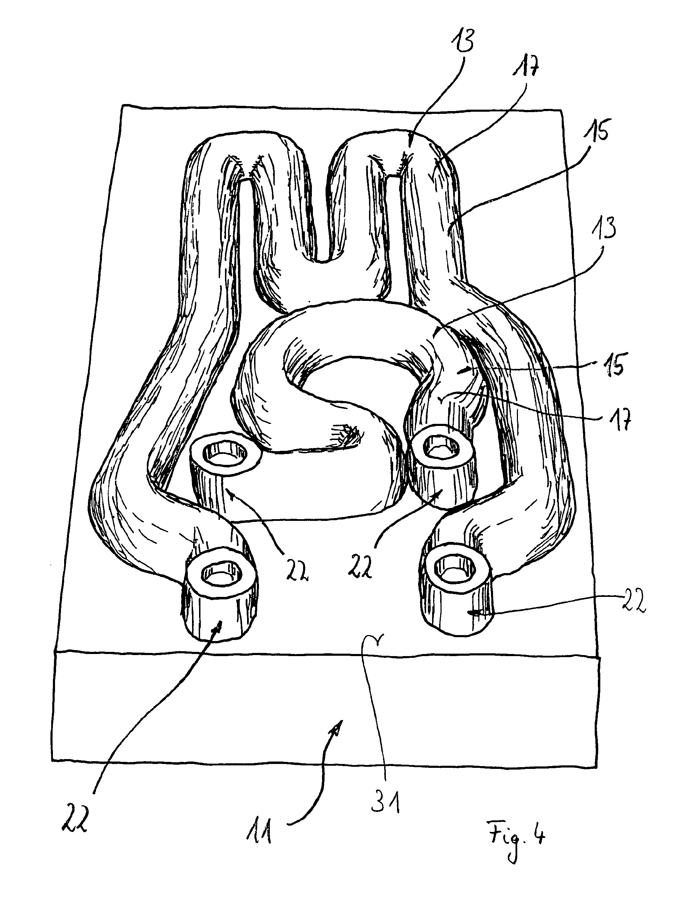

Im Anschluss an das Verschweißen der ersten Schicht wird erneut eine Schicht Pulver aufgebracht und mit dem Laser verschweißt. Diese Verfahrensschritte werden so häufig wiederholt, bis der Temperierkanal 13 bzw. mehrere Temperierkanäle 13 vollständig auf der Grundplatte 11 bzw. einer weiter unten erwähnten Zwischenplatte 39 ausgebildet sind (siehe Fig.4). Schichtweise werden derart der Boden 14 des Temperierkanals 13 und die Wand 15 auf der Grundplatte 11 aufgebaut. An den Stellen, die nicht mit dem Laser verschweißt wurden, liegt das Pulver weiterhin lose vor und kann anschließend z.B. durch Herausschütteln oder Ausblasen entfernt werden.

Der in den Zeichnungen dargestellte Temperierkanal 13 hat eine im Querschnitt elliptisch geformte Wand 15. Andere Querschnittsformen des Temperierkanals 13 sind aber ebenfalls denkbar.

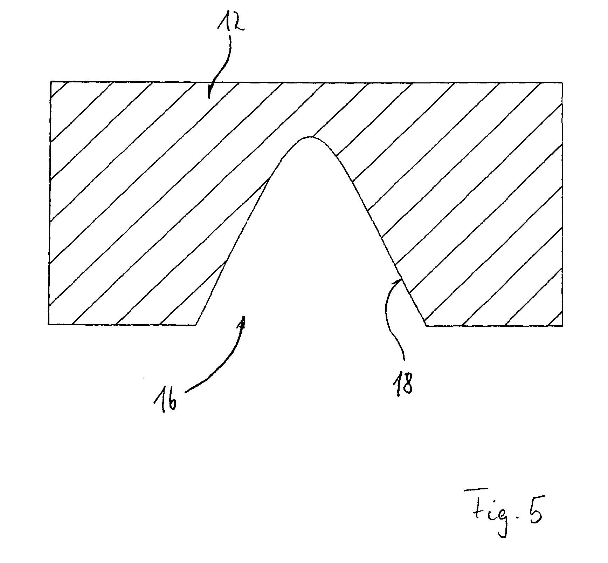

Die Ausnehmung 16 in der Aufbauplatte 12 kann komplementär zur Außenform des Temperierkanals 13 ausgebildet bzw. der Außenform angepasst sein. Gemäß der Fig. 1 und 5 ist die Ausnehmung 16 komplementär zur Querschnittsform der Wand 15 des Tragteils 11 ebenfalls elliptisch ausgebildet und beispielsweise durch Fräsen hergestellt. Alternativ kann die Ausnehmung 16 aber auch eine von der Querschnittsform der Wand 15 unterschiedliche Form, beispielsweise eine Teilkreisform, aufweisen, die z.B. mittels eines Kugelfräskopfes herstellbar ist.

Die Form des Temperierkanals 13 muss nicht über die gesamte Länge des Temperierkanals 13 konstant sein. Je nach Gegebenheiten bzw. Erfordernissen in der Werkzeugform 10 kann die Querschnittsform des Temperierkanals 13 variieren.

Der Temperierkanal 13 kann beispielsweise endseitig Anschlussvorrichtungen 22 aufweisen (siehe Fig. 4), an welchen eine Temperiermittelzuführung bzw. eine Temperiermittelabführung angeschlossen werden kann. Die Anschlussvorrichtung 22 kann beispielsweise eine zylindrische Form aufweisen. Die Anschlussvorrichtung 22 kann über einen nicht dargestellten Verbindungskanal mit einer nicht dargestellten Kupplungsvorrichtung an der Außenseite der Werkzeugform 10 verbunden sein. An der Kupplungsvorrichtung sind Temperiermittelzu- bzw. -abführung leicht anschließbar. In der Aufbauplatte 12 kann eine nicht dargestellte Ausnehmung für die Anschlussvorrichtung 22 vorgesehen sein, mittels welcher die Anschlussvorrichtung 22, z.B. über einen Kanal, mit einer Außenseite der Werkzeugform 10 verbunden ist, so dass ein einfacher Anschluss an der Außenseite der Werkzeugform 10 möglich ist.

Die Grundplatte 11 und die Aufbauplatte 12 können kraft- und / oder formschlüssig miteinander verbunden sein. Im Ausführungsbeispiel gemäß Fig. 1 sind Grundplatte 11 und Aufbauplatte 12 mittels einer durch eine Strichpunktlinie angedeutete Schraubverbindung 25 gegeneinander verspannt. Zwischen Grundplatte 11 und Aufbauplatte 12 ist ein Dichtmittel 26 angeordnet. Auf diese Weise wird eine zusätzliche Sicherheit gegen Austritt des Temperiermittels T bei eventuell auftretenden Leckagen des Temperierkanals 13 geschaffen.

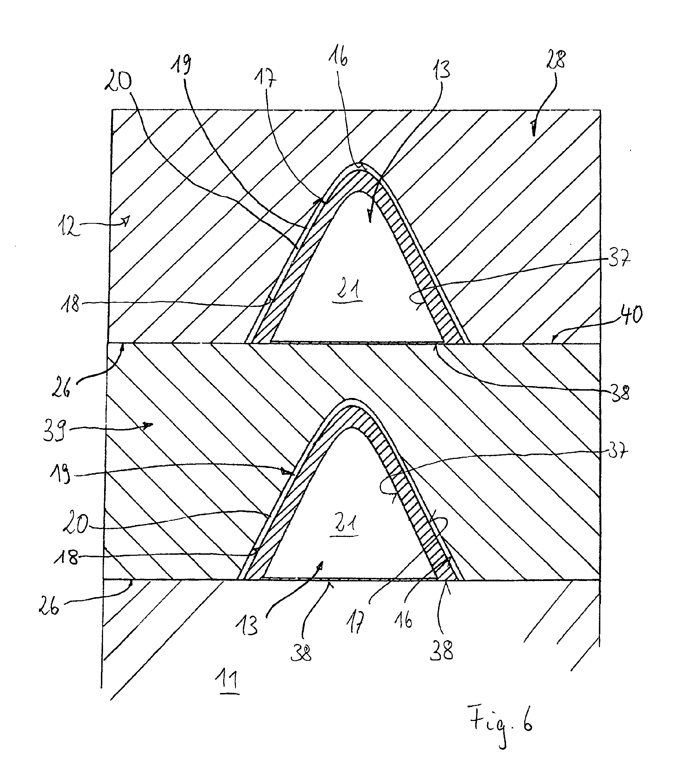

Bei dem Ausführungsbeispiel gemäß Fig. 6 ist zwischen der lediglich angedeuteten Grundplatte 11 und der Aufbauplatte 12 eine Zwischenplatte 39 angeordnet. Die Zwischenplatte 39 weist eine Ausnehmung 16 auf, in welcher der Temperierkanal 13 der Grundplatte 11 aufgenommen ist. Auf einer von der Grundplatte 11 abgewandte Seite 40 der Zwischenplatte 39 ist ebenfalls ein Temperierkanal 13 angeordnet, der in gleicher Weise hergestellt ist, wie der Temperierkanal 13 der Grundplatte 11. Der Temperierkanal 13 der Zwischenplatte 39 ist in einer Ausnehmung 16 der Aufbauplatte 12 angeordnet.

Zwischen Grundplatte 11 und Aufbauplatte 12 können beliebig viele Zwischenplatten 39 angeordnet sein, die z.B. ihrerseits einen oder mehrere Ausnehmungen 16 aufweisen können. Zudem können die Zwischenplatten 39 einen oder mehrere Temperierkanäle 13 aufweisen. Auf diese Weise lassen sich die Kühlkanäle 13 an beliebiger Stelle räumlich innerhalb der Form verteilen.

Es sei noch einmal erwähnt, dass auch mehrere Temperierkreisläufe zum Kühlen oder Erwärmen, z.B. räumlich verteilt, innerhalb der Form angeordnet werden können, wie z.B. in Fig. 4 dargestellt. Die unterschiedlichen Temperierkanäle 13 können auf einer Platte oder auf verschiedenen Platten der Werkzeugform 10 angeordnet sein.

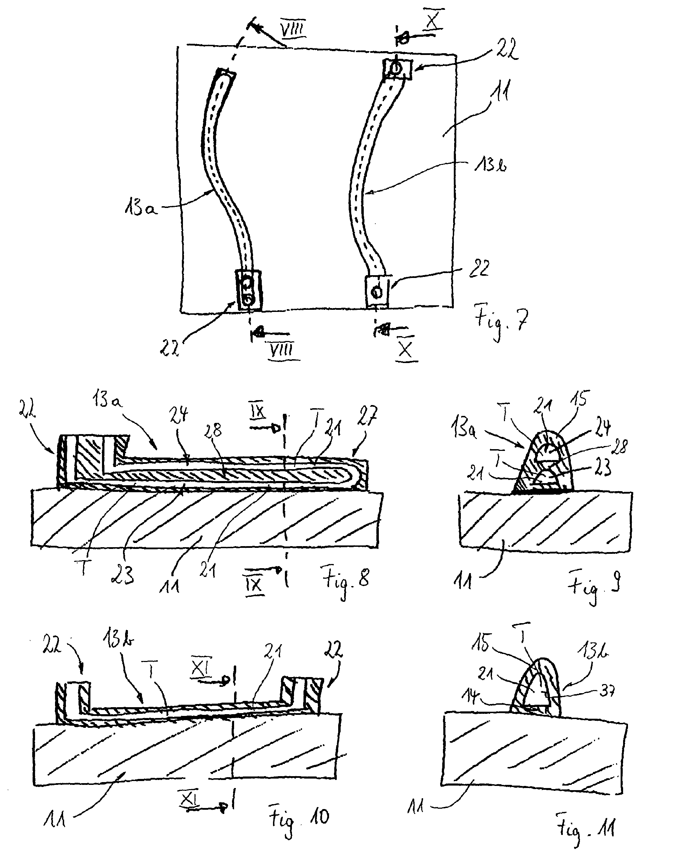

Es können z.B. mehrere Temperierkanäle 13 übereinander oder nebeneinander ausgebildet sein und eine gemeinsame Wand 15 aufweisen. Gemäß der Fig. 7 bis 9 sind ein Vorlauf 23 sowie ein Rücklauf 24 eines Temperierkanals 13a übereinander angeordnet und an einem Endbereich 27 miteinander verbunden. Zwischen Vorlauf 23 und Rücklauf 24 ist ein Trennsteg 28 ausgebildet. An der Anschlussvorrichtung 22 können sowohl der Vorlauf 23 mit einer nicht dargestellten Zuführung, als auch der Rücklauf 24 mit einer ebenfalls nicht dargestellten Ableitung des Temperiermittels T verbunden sein. Bei dem Temperierkanal 13b erfolgt die Temperiermittel- Zu- bzw. - Ableitung über separate Anschlussvorrichtungen 22.

Die Temperierkanäle 13 können auch mit Kanälen verbunden sein, die sich auf oder in anderen Werkzeugteilen, z.B. in anderen Werkzeugplatten, befinden. Dabei kann es sich z.B. um Temperierkanäle handeln, die in gleicher Weise durch Pulverauftragsschweißen hergestellt sind. Alternativ kann es sich z.B. auch um Bohrungen oder Ausnehmungen handeln, die in Teile der Werkzeugform 10 eingebracht sind.

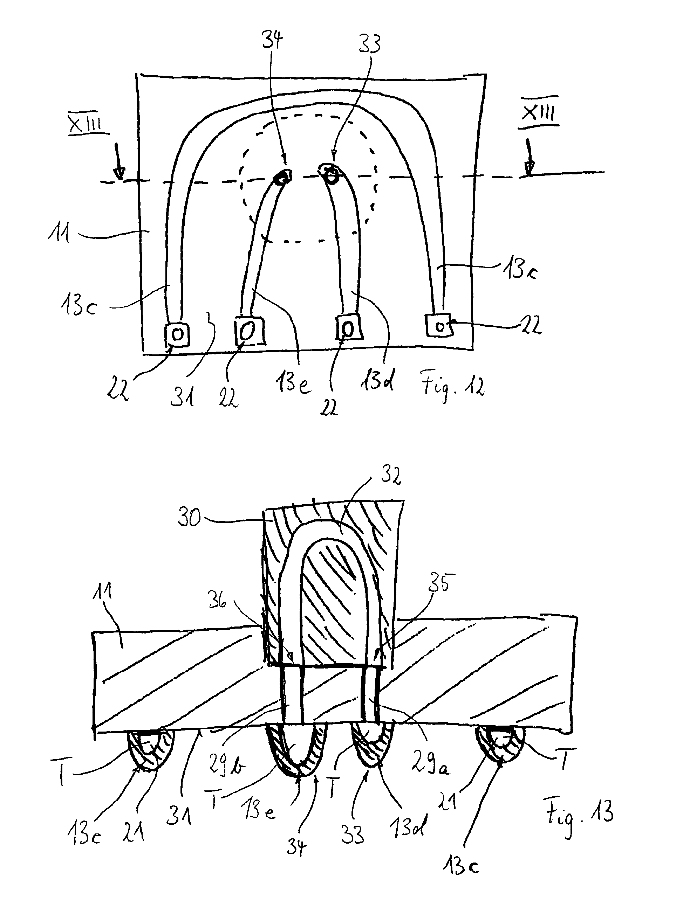

Gemäß der Fig. 12 und 13 sind Temperierkanäle 13c, 13d und 13e auf der Oberfläche 31 der Grundplatte 11 angeordnet. Der Temperierkanal 13d ist an einem Endbereich 33 mittels einer Bohrung 29a, der Temperierkanal 13e an einem Endbereich 34 mittels einer Bohrung 29b verbunden. Die Bohrung 29a mündet in einen Endbereich 35, die Bohrung 29b in einen Endbereich 36 eines in einem Werkzeugeinsatz 30 vorgesehenen Kanals 32. Der Kanal 30 ist in Form einer Ausnehmung ausgebildet. Der Vorlauf des Temperiermediums T erfolgt z.B. über den Temperierkanal 13d und die Bohrung 29a in den Kanal 32. Der Rücklauf kann dann aus dem Kanal 32 über die Bohrung 29b und den Temperierkanal 13e erfolgen.

Es sei noch erwähnt, dass alternativ zu den dargestellten Ausführungsformen der Temperierkanal 13 statt auf einer ebenen Werkzeugplatte auch auf frei geformten Oberflächen von Teilen der Werkzeugform angeordnet sein kann. Im vorliegenden Ausführungsbeispiel wurde der erfindungsgemäße Temperierkanal 13 zur Temperierung einer Werkzeugform 10 verwendet. Der Temperierkanal 13 kann aber alternativ zur Temperierung jeder Vorrichtung eingesetzt werden.

## Patentansprüche

1. Vorrichtung zum Erwärmen oder Kühlen, insbesondere als Teil einer Werkzeugform zur Verarbeitung plastischer Massen, wie Kunststoffspritzgießform, mit wenigstens einem Temperierkanal (13), zur Leitung eines dem Kühlen oder dem Erwärmen der Vorrichtung (10) dienenden Temperiermediums (T), **dadurch gekennzeichnet, dass** der Temperierkanal (13) zumindest mit einem Teilumfang von der Innenfläche (37) eines schichtweise aus Pulverwerkstoff auf einer Fläche (31) eines Tragteils (11) der Vorrichtung (10) aufgetragenen und schichtweise verschweißten etwa rohrartigen Gebildes (14, 15) begrenzt ist.

2. Vorrichtung nach Anspruch 1, **dadurch gekennzeichnet, dass** der Temperierkanal (13) von der Fläche (31) des Tragteils (13) und von der Innenfläche (37) des nur einen Teilumfang aufweisenden etwa rohrartigen Gebildes (15) begrenzt ist.

3. Vorrichtung nach Anspruch 1, **dadurch gekennzeichnet, dass** der Temperierkanal (13) insgesamt von der Innenfläche (41, 37) des etwa rohrartigen Gebildes (14, 15) begrenzt ist.

4. Vorrichtung nach einem der Ansprüche 1 bis 3, **dadurch gekennzeichnet, dass** der Temperierkanal (13) wenigstens teilweise in einer Ausnehmung (16) eines Aufnahmeteils (12) der Vorrichtung (10) aufgenommen ist.

5. Vorrichtung nach Anspruch 4, **dadurch gekennzeichnet, dass** das Tragteil (11) und das Aufnahmeteil (12) form- und / oder kraftschlüssig miteinander verbunden sind.

6. Vorrichtung nach einem der Ansprüche 4 oder 5, **dadurch gekennzeichnet, dass** das Tragteil (11) und das Aufnahmeteil (12) flüssigkeitsdicht miteinander verbunden sind.

7. Vorrichtung nach einem der vorangehenden Ansprüche, **dadurch gekennzeichnet, dass** das Tragteil (11) und/oder das Aufnahmeteil (12) von einem Stahl gebildet sind.

8. Vorrichtung nach einem der vorangehenden Ansprüche, **dadurch gekennzeichnet, dass** der Temperierkanal (13) wenigstens teilweise von einem Edelstahl gebildet ist.

9. Vorrichtung nach einem der vorangehenden Ansprüche, **dadurch gekennzeichnet, dass** die Form der Ausnehmung (16) etwa der Form des Temperierkanals (13) entspricht.

10. Vorrichtung nach einem der vorangehenden Ansprüche, **dadurch gekennzeichnet, dass** der Temperierkanal (13) im Wesentlichen elliptisch ausgebildet ist.

11. Vorrichtung nach einem der Ansprüche 4 bis 10, **dadurch gekennzeichnet, dass** zwischen einer Außenfläche (17) des Temperierkanals (13) und einer Innenfläche (18) der Ausnehmung (16) ein Zwischenraum (20) gebildet ist.

12. Vorrichtung nach Anspruch 11, **dadurch gekennzeichnet, dass** in dem Zwischenraum (20) ein Wärmeleitmittel (19) angeordnet ist.

13. Vorrichtung nach Anspruch 12, **dadurch gekennzeichnet, dass** das Wärmeleitmittel (19) den Zwischenraum (20) im Wesentlichen ausfüllt.

14. Vorrichtung nach einem der vorangehenden Ansprüche, **dadurch gekennzeichnet, dass** der Temperierkanal (13) mit wenigstens einer Anschlussvorrichtung (22) versehen ist, welche den lösbaren Anschluss an eine Temperiermittelzu- und / oder -abführung ermöglicht.

15. Vorrichtung nach einem der Ansprüche 4 bis 14, **dadurch gekennzeichnet, dass** zwischen Aufnahmeteil (12) und Tragteil (11) ein Zwischenteil angeordnet ist, welches mit wenigstens einem Temperierkanal (13) und / oder wenigstens einer Ausnehmung (16) versehen ist.

16. Verfahren zur Herstellung einer Vorrichtung zum Erwärmen oder Kühlen, insbesondere einer Vorrichtung gemäß einem der Ansprüche 1 bis 15, **dadurch gekennzeichnet, dass** auf einem Tragteil (11) der Vorrichtung (10) eine Schicht Pulverwerkstoff aufgetragen wird und dass die Schicht an definierten Stellen verschweißt wird, wobei die Verfahrensschritte wiederholt werden, bis auf dem Tragteil (11) wenigstens ein Temperierkanal (13) mit etwa rohrartigem Querschnitt ausgebildet ist.

17. Verfahren nach Anspruch 16, **dadurch gekennzeichnet, dass** der Temperierkanal (13) in einer Ausnehmung (16) eines Aufnahmeteils (12) der Vorrichtung (10) angeordnet wird.

18. Verfahren nach Anspruch 17, **dadurch gekennzeichnet, dass** zwischen einer Außenfläche (17) des Temperierkanals (13) und einer Innenfläche (18) der Ausnehmung (16) ein Wärmeleitmittel (19) angeordnet wird.

19. Werkzeugform mit einer Vorrichtung zum Erwärmen oder Kühlen gemäß einem der Ansprüche 1 bis 15.
